# EUROPÄISCHE PATENTANMELDUNG

(11) **EP 3 045 719 A1**
(43) Veröffentlichungstag der Anmeldung: **20.07.2016**
(21) Anmeldenummer: 15199973.7
(22) Anmeldetag: 15.12.2015
(51) Int. Cl.: F03D 3/00, F03D 15/00

(54) **WINDGETRIEBE MIT KRONENRAD**

(30) Priorität: 15.01.2015 DE 102015200500
(71) Anmelder: ZF Friedrichshafen AG, 88046 Friedrichshafen (DE); ZF Wind Power Antwerpen NV, 3920 Lommel (BE)
(72) Erfinder: Leimann, Dirk, 2650 EDEGEM (BE)

(57) **Zusammenfassung**

Die Erfindung betrifft ein Getriebe (101) für eine Windkraftanlage, wobei die Windkraftanlage einen Rotor und einen ersten Generator (115) aufweist; und wobei das Getriebe ausgebildet ist, ein Antriebsdrehmoment von dem Rotor zu dem Generator (115) zu übertragen. Das Getriebe (101) umfasst ein Kronenrad (103) und ein erstes Zahnrad (105); wobei das erste Zahnrad (105) mit dem Kronenrad (103) kämmt; und wobei das Kronenrad (103) mindestens einen Teil des Antriebsdrehmoments auf das erste Zahnrad (105) überträgt.

## Beschreibung

Die Erfindung betrifft ein Getriebe nach dem Oberbegriff von Anspruch 1.

Aus dem Stand der Technik sind vertikale Windkraftanlagen bekannt. Diese zeichnen sich durch einen Rotor aus, dessen Drehachse vertikal verläuft. Bei vertikalen Windkraftanlagen ist kein Turm erforderlich. Stattdessen können die Komponenten des Antriebsstrangs direkt auf ein am Boden befindliches Fundament montiert werden. Besonders kleinere Windkraftanlagen sind daher häufig in Vertikalbauweise ausgeführt.

Aus dem Stand der Technik bekannte Getriebe für vertikale Windkraftanlagen weisen miteinander kämmende Kegelräder auf. Ein erstes Kegelrad ist dabei mittels einer vertikal verlaufenden Welle drehfest mit dem Rotor verbunden. Ein zweites Kegelrad kämmt mit dem ersten Kegelrad und treibt über eine horizontal verlaufende Welle und gegebenenfalls eine zwischengeschaltete Getriebestufe einen Generator an.

Kegelräder müssen allerdings sorgfältig relativ zueinander ausgerichtet werden. Andernfalls ergibt sich ein unzureichendes Tragbild, das zu Beschädigungen und einem vorzeitigen Ausfall führen kann. Die Ausrichtung der Kegelräder ist aufwändig. Dies konterkariert das Bestreben, kleinere Windkraftanlagen kostengünstig anzubieten.

Der Erfindung liegt die Aufgabe zu Grunde, ein Getriebe für eine Windkraftanlage unter Umgehung der den aus dem Stand der Technik bekannten Lösungen innewohnenden Nachteile verfügbar zu machen. Insbesondere soll die Montage des Getriebes vereinfacht werden, sodass geringere Kosten anfallen.

Diese Aufgabe wird gelöst durch ein Getriebe nach Anspruch 1. Bevorzugte Weiterbildungen sind in den Unteransprüchen enthalten.

Das erfindungsgemäße Getriebe ist ausgebildet, ein Antriebsdrehmoment von einem Rotor einer Windkraftanlage zu einem ersten Generator der Windkraftanlage zu übertragen. Bei dem Rotor handelt es sich um ein Mittel, das, wenn es einer Luftströmung ausgesetzt wird, durch die Luftströmung angetrieben und in Drehung versetzt wird.

Der erste Generator dient der Wandlung von mechanischer Energie des Luftstroms in elektrische Energie.

Erfindungsgemäß weist das Getriebe ein Kronenrad und ein erstes Zahnrad auf. Das erste Zahnrad kämmt mit dem Kronenrad.

Ein Kronenrad ist ein Zahnrad, bei dem ein kreisringförmiger Bereich verzahnt ist. Das Kronenrad ist ausgebildet, mit einem oder mehreren Stirnrädern bzw. Zylinderrädern zu kämmen.

Entsprechend handelt es sich bei dem ersten Zahnrad vorzugsweise um ein Stirnrad bzw. Zylinderrad. Ein Stirnrad bzw. Zylinderrad zeichnet sich durch einen senkrechten Kreiszylinder aus, der an seiner Mantelfläche verzahnt ist.

Eine Drehachse des ersten Zahnrads verläuft vorzugsweise in einer Ebene, die senkrecht zu einer Drehachse des Kronenrads ausgerichtet ist. Dies bedeutet, dass die Drehachse des ersten Zahnrads und die Drehachse des Kronenrads orthogonal zueinander verlaufen. Es sind sowohl Ausführungsformen denkbar, bei denen sich die Drehachsen des ersten Zahnrads und des Kronenrads schneiden, als auch solche, bei denen sich die Drehachsen nicht schneiden.

Das Kronenrad überträgt mindestens einen Teil des o.g. Antriebsdrehmoments auf das erste Zahnrad. Mindestens ein Teil eines von dem Rotor zu dem ersten Generator verlaufenden Drehmomentflusses erreicht also zunächst das Kronenrad, wird dann von dem Kronenrad auf das erste Zahnrad übertragen und gelangt im weiteren Verlauf zu dem ersten Generator. Ausgehend von dem Kronenrad liegt somit das erste Zahnrad in dem Drehmomentfluss generatorseitig. Umgekehrt ist das Kronenrad ausgehend von dem ersten Zahnrad in dem Drehmomentfluss rotorseitig angeordnet.

Die Erfindung vereinfacht die Positionierung des ersten Zahnrads relativ zu dem Kronenrad. Insbesondere ist keine Ausrichtung des ersten Zahnrads in axialer Richtung, d.h. in Richtung der Drehachse des ersten Zahnrads, erforderlich. Dies verringert den Montageaufwand. Auch die Wartung vereinfacht sich, da das erste Zahnrad gegebenenfalls zusammen mit dem ersten Generator entnommen und eingesetzt werden kann, ohne dass anschließend eine Justierung des Tragbilds erforderlich wäre.

Der Rotor ist vorzugsweise drehfest mit dem Kronenrad verbunden. Zwischen dem ersten Zahnrad und dem ersten Generator bzw. einem Rotor des ersten Generators kann eine drehfeste Verbindung bestehen. Vorzugsweise ist anstelle der drehfesten Verbindung eine Getriebestufe zwischengeschaltet, um eine höhere Gesamtübersetzung zu erreichen. Dabei ist das erste Zahnrad drehfest mit einer Eingangswelle der Zwischenstufe verbunden. Eine Ausgangswelle der Zwischenstufe ist dann drehfest mit dem ersten Generator bzw. dem Rotor des ersten Generators verbunden.

In einer bevorzugten Weiterbildung handelt es sich bei der Windkraftanlage um eine vertikale Windkraftanlage. Dies bedeutet, dass die Drehachse des Rotors vertikal verläuft.

In einer darüber hinaus bevorzugten Weiterbildung verläuft die Drehachse des Kronenrads entsprechend vertikal.

Weiterhin ist das Getriebe vorzugsweise dahingehend weitergebildet, dass die Drehachse des ersten Zahnrads horizontal verläuft.

Auch die Drehachse des Rotors des ersten Generators verläuft vorzugsweise horizontal.

Das erste Zahnrad und der erste Generator bilden zusammen mit einer Welle oder einer Getriebestufe, die das erste Zahnrad mit dem ersten Generator verbindet, ein erstes Antriebsmodul. In einer besonders bevorzugten Weiterbildung weist das Getriebe mindestens ein zweites Antriebsmodul auf. Der Aufbau des zweiten Antriebsmoduls gleicht dem Aufbau des ersten Antriebsmoduls. Entsprechend umfasst das zweite Antriebsmodul ein zweites Zahnrad und einen zweiten Generator. Wie das erste Zahnrad kämmt auch das zweite Zahnrad mit dem Kronenrad. Infolge dessen verzweigt sich das Antriebsdrehmoment. So überträgt das Kronenrad einen ersten Teil des Antriebsdrehmoments auf das erste Zahnrad und einen zweiten Teil Antriebsdrehmoments auf das zweite Zahnrad.

Vorzugsweise handelt es sich bei dem zweiten Zahnrad um ein Stirnrad bzw. Zylinderrad. Eine Drehachse des zweiten Zahnrads verläuft ebenso wie eine Drehachse eines Rotors des zweiten Generators bevorzugt horizontal.

Standardisierte Auslegungsvorschriften für vertikale Windkraftanlagen existieren bisher nicht. Daher ist es schwierig, eine vertikale Windkraftanlage im Vorfeld an die auftretenden Lastfälle anzupassen. Das weiterbildungsgemäße Getriebe mit mehreren Antriebsmodulen hingegen ermöglicht eine nachträgliche Anpassung. Stellt sich im Betrieb der Windkraftanlage heraus, dass die Anlage über- oder unterdimensioniert ist, können einzelnen Antriebsmodule entfernt oder hinzugefügt werden.

Besonders vorteilhaft sind mehrere Module mit schrägverzahnten Zahnrädern. Dies ermöglicht eine Anpassung der Phasenlage des von den einzelnen Generatoren erzeugten Stroms, indem die Module relativ zu dem Kronenrad in radialer Richtung verschoben werden. In einer bevorzugten Weiterbildung sind entsprechend das erste Zahnrad und das zweite Zahnrad schrägverzahnt. Eine Anpassung der Phasenlage des erzeugten Stroms erfolgt dann durch Verschiebung des ersten und/oder zweiten Antriebsmoduls relativ zu dem Kronenrad in radialer Richtung, d.h. in Richtung der Drehachse des Zahnrads des jeweiligen Moduls.

Alternativ können das Kronenrad sowie das erste Zahnrad und gegebenenfalls das zweite Zahnrad geradverzahnt sein.

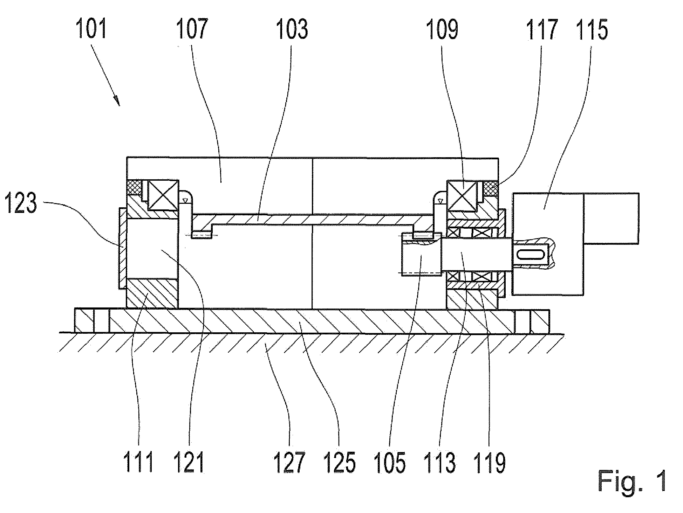

Ein bevorzugtes Ausführungsbeispiel der Erfindung zeigt Fig. 1. Übereinstimmende Bezugsziffern kennzeichnen dabei gleiche oder funktionsgleiche Merkmale. Im Einzelnen zeigt:
Fig. 1: Ein Windkraftgetriebe mit Kronenrad.

Das in Fig. 1 dargestellte Getriebe 101 weist ein Kronenrad 103 und ein mit dem Kronenrad 103 kämmendes Stirnrad 105 auf. Eine tellerförmige Plattform 107 ist mittels eines Rotorlagers 109 um eine vertikale Drehachse drehbar in einem Getriebegehäuse 111 gelagert. Das Zahnrad 105 ist drehfest auf einer Welle 113 fixiert und treibt über die Welle 113 einen Generator 115 an. Eine Dichtung 117 verläuft zwischen der Plattform 107 und dem Getriebegehäuse 111.

Das Zahnrad 105, die Welle 113 und der Generator 115 bilden zusammen mit einer Fixierhülse 119 ein Antriebsmodul. In der Fixierhülse 119 ist die Welle 113 drehbar gelagert. Die Fixierhülse 119 wiederum ist in das Getriebegehäuse 111 eingebracht. Zur Aufnahme der Fixierhülse 119 weist das Getriebegehäuse 111 entsprechend Öffnungen 121 auf.

Um das Getriebe 101 um ein Antriebsmodul zu ergänzen, wird das Antriebsmodul mit der Fixierhülse 119 in die Öffnung 121 eingeführt. Die Fixierhülse 119 wird - etwa mittels Verschraubungen - in dem Getriebegehäuse 111 fixiert. Wird nun ein elektrischer Anschluss des Generators 115 hergestellt, ist das Antriebsmodul betriebsbereit. Eine Ausrichtung des Zahnrads 105 relativ zu dem Kronenrad 103 ist nicht erforderlich.

Das Getriebegehäuse 111 weist mehrere Öffnungen 121 auf. In jede dieser Öffnungen 121 lässt sich ein Antriebsmodul einsetzen. Öffnungen 121, die nicht mit einem Antriebsmodul belegt sind, werden mittels einer Abdeckung 123 verschlossen.

Das Getriebegehäuse 111 weist eine Grundplatte 125 auf, die in einem Fundament 127 verschraubt ist. Die Plattform 109 dient als Flansch zur Aufnahme eines Rotors. Dabei entspricht die Drehachse des Rotors der Drehachse der Plattform 109. Eine Drehachse der Welle 113 mit dem Zahnrad 105 hingegen ist orthogonal dazu ausgerichtet.

### Bezugszeichen

- 101: Getriebe
- 103: Kronenrad
- 105: Stirnrad
- 107: Plattform
- 109: Rotorlager
- 111: Getriebegehäuse
- 113: Welle
- 115: Generator
- 117: Dichtung
- 119: Fixierhülse
- 121: Öffnung
- 123: Abdeckung
- 125: Grundplatte
- 127: Fundament

## Patentansprüche

1. Getriebe (101) für eine Windkraftanlage; wobei
die Windkraftanlage einen Rotor und einen ersten Generator (115) aufweist; und wobei
das Getriebe ausgebildet ist, ein Antriebsdrehmoment von dem Rotor zu dem Generator (115) zu übertragen; **gekennzeichnet durch**
ein Kronenrad (103) und ein erstes Zahnrad (105); wobei
das erste Zahnrad (105) mit dem Kronenrad (103) kämmt; und wobei das Kronenrad (103) mindestens einen Teil des Antriebsdrehmoments auf das erste Zahnrad (105) überträgt.

2. Getriebe (101) nach Anspruch 1; **dadurch gekennzeichnet, dass**
eine Drehachse des Rotors vertikal verläuft.

3. Getriebe (101) nach einem der vorhergehenden Ansprüche; **dadurch gekennzeichnet, dass**
eine Drehachse des Kronenrads (103) vertikal verläuft.

4. Getriebe (101) nach einem der vorhergehenden Ansprüche; **dadurch gekennzeichnet, dass**
eine Drehachse des ersten Zahnrads (105) horizontal verläuft.

5. Getriebe (101) nach einem der vorhergehenden Ansprüche; **dadurch gekennzeichnet, dass**
eine Drehachse eines Rotors des ersten Generators (115) horizontal verläuft.

6. Getriebe (101) nach einem der vorhergehenden Ansprüche; **gekennzeichnet durch** ein zweites Zahnrad und einen zweiten Generator; wobei
das zweite Zahnrad mit dem Kronenrad (103) kämmt; und wobei das Kronenrad (103) einen Teil des Antriebsdrehmoments auf das zweite Zahnrad überträgt.

7. Getriebe (101) nach dem vorhergehenden Anspruch; **dadurch gekennzeichnet, dass**
das erste Zahnrad (105) und das zweite Zahnrad schrägverzahnt sind.
